# EUROPÄISCHE PATENTSCHRIFT

(11) **EP 3 365 158 B1**
(45) Veröffentlichungstag und Bekanntmachung des Hinweises auf die Patenterteilung: **04.12.2024**
(21) Anmeldenummer: 16782256.8
(22) Anmeldetag: 18.10.2016
(51) Int. Cl.: B29C 70/34, B29C 70/44, B30B 5/02, B29C 51/28

(54) **VERFAHREN ZUM HERSTELLEN EINES BAUTEILS AUS EINEM FASERVERBUNDWERKSTOFF**
METHOD FOR PRODUCING A COMPONENT FROM A FIBRE-COMPOSITE MATERIAL
PROCÉDÉ POUR LA FABRICATION D'UN ÉLÉMENT EN MATÉRIAU COMPOSITE À BASE DE FIBRES

(30) Priorität: 20.10.2015 DE 102015117857
(43) Veröffentlichungstag der Anmeldung: 29.08.2018
(73) Patentinhaber: Siempelkamp Maschinen- und Anlagenbau GmbH, 47803 Krefeld (DE)
(72) Erfinder: SEBASTIAN, Lothar, 47239 Duisburg (DE); SCHÜRMANN, Klaus, 41363 Jüchen (DE); SCHÖLER, Michael, 47509 Rheurdt (DE)
(74) Vertreter: Andrejewski - Honke Patent- und Rechtsanwälte Partnerschaft mbB
(86) Internationale Anmeldenummer: PCT/EP2016/074988
(87) Internationale Veröffentlichungsnummer: WO 2017/067934

(56) Entgegenhaltungen:
- EP-A1- 0 584 017
- EP-A1- 2 070 678
- EP-A2- 2 561 978
- WO-A1-90/03880
- DE-A1- 3 727 926

## Beschreibung

Die Erfindung betrifft ein Verfahren zum Herstellen eines (dreidimensionalen) Bauteils aus einem Faserverbundwerkstoff durch Umformen eines (zweidimensionalen) thermoplastischen Organoblechs.

Organoblech meint im Rahmen der Erfindung ein plattenförmiges (konsolidiertes) Halbzeug, welches aus Fasern besteht, die in eine Matrix aus thermoplastischem Kunststoff eingebettet sind. Die Fasern können als Endlosfasern oder Langfasern vorliegen, zum Beispiel in Form eines Fasergewebes oder Fasergeleges. Bei den Fasern kann es sich zum Beispiel um Kohlenstofffasern, Glasfasern oder Aramidfasern handeln. Solche Organobleche werden als Faserverbundwerkstoffe für die Herstellung von Bauteilen (z. B. Leichtbau) für die Luft- und Raumfahrttechnik (z. B. den Flugzeugbau) und für die Fahrzeugtechnik (z. B. im Automobilbau) eingesetzt. Durch die thermoplastische Fasermatrix lassen sich solche Organobleche ähnlich wie Metallbleche (warm) umformen, so dass in der Praxis bei der Verarbeitung von Organoblechen bzw. bei der Herstellung von Bauteilen aus solchen Organoblechen auf Methoden der Metallblechverarbeitung zurückgegriffen wird.

So beschreibt zum Beispiel die DE 10 2011 115 730 A1 ein Verfahren zum Umformen von thermoplastischen Faserhalbzeugplatten mit orientierten Fasern zu dreidimensional geformten thermoplastischen Halbzeugen mit definierten Orientierungsgraden, wobei die als Organoblech ausgebildete Faserhalbzeugplatte durch eine Heizvorrichtung auf eine Temperatur unterhalb einer Erweichungstemperatur des Thermoplasten erwärmt wird, wobei die Faserhalbzeugplatte auf einem Formmodul positioniert wird, das die dreidimensionale Form abbildet. Anschließend wird ein Fluid in die Formkammer zugeführt und dadurch die erwärmte Faserhalbzeugplatte an das Formmodul angepresst und hierdurch zu dem dreidimensional geformten thermoplastischen Halbzeug umgeformt.

Ferner beschreibt die EP 2 561 978 A2 ein Verfahren sowie eine Vorrichtung zum Formpressen und Härten von Verbundstoffen. Zur Herstellung eines gehärteten Verbundstoffes dient eine Vorrichtung, die eine elastische Schicht sowie einer Form aufweist. Die elastische Schicht ist auf einem starren Träger angeordnet. Die Form wiederum ist auf der elastischen Schicht und dem Träger angeordnet und umfasst eine innere Oberfläche, die zusammen mit einem Teil der elastischen Schicht die Formungskammer definiert. Innerhalb der Formungskammer wird ein Prepreg angeordnet, der zu dem Verbundstoff geformt und anschließend gehärtet wird. Das Umformen erfolgt durch das Einleiten eines Fluids, das auf die elastische Schicht derart einwirkt, dass diese expandiert und das Prepreg in die Form drückt.

Weiterhin beschreibt die EP 0 584 017 A1 eine Presse zum Formen eines Gegenstandes aus Verbundmaterial mit verstärkenden Fasern in einer Polymermatrix. Die Formung erfolgt zwischen einer elastischen Membran und einer Form, die die Form des zu formenden Bauteils bestimmt. Die Presse weist eine untere Platte und eine obere Platte auf, wobei die obere Platte zur Erzeugung einer Presskraft dient. In die Form sind Heiz- und Kühlmittel integriert, beispielsweise weist die Form Kanäle auf, durch die ein Heiz- bzw. ein Kühlfluid geleitet werden kann. An der oberen Platte ist eine elastische Membran befestigt, auf die durch Einspeisung eines Fluids ein Druck ausgeübt wird, um das Formteil zu erzeugen. Durch den erzeugten Druck verformt sich die Membran und drückt das eingesetzte Material in die Form.

Weitere Verfahren zur Verarbeitung von Organoblechen bzw. von Bauteilen aus solchen Organoblechen werden zum Beispiel in der DE 10 2013 105 080 A1, der DE 10 2011 111 233 A1 und der DE 10 2011 111 232 A1 beschrieben.

Aus der DE 37 27 926 A1 ist ferner ein Verfahren zur Herstellung von Formteilen unter Verwendung von ebenen und/oder vorgeformten Platten mittels Heißpressen bekannt. Dazu werden eine beheizbare Formmulde mit Abdeckung und eine Trennfolie verwendet. Die Trennfolie setzt der Verformung einen größeren Widerstand entgegen als das aus einem faserverstärkten Thermoplasten bestehende Halbzeug, sodass die Folie das Ziehverhalten und die Qualität des Ergebnisses bestimmt. Bei der Umformung dient die Trennfolie aufgrund ihrer höheren Festigkeit als Überträger gleichmäßiger Dehnungseigenschaften und verhindert unkontrollierte Ausdehnungen des Thermoplasthalbzeuges. Die Trennfolie soll bevorzugt aus einer Aluminiumlegierung bestehen. Alternativ kann eine Trennfolie aus Gummi oder Kunststoff verwendet werden.

Weiterhin ist aus der WO 90/03880 ein Verfahren zur Herstellung von faserverstärkten Kunststoffprodukten bekannt. Dazu werden Platten bestehend aus einem Thermoplasten und Verstärkungsfasern erzeugt, die auf die Erweichungstemperatur erwärmt werden und anschließend in eine Form gepresst werden. Das Verformen erfolgt bevorzugt in einer porösen Vakuumform unter Einsatz einer Barriereschicht, die verhindert, dass Luft durch die Platte gesaugt wird. Alternativ wird eine Form bestehend aus einem Ober-und einem Unterteil eingesetzt.

Alternativ wird in der DE 198 59 798 C1 die Herstellung von Formkörpern aus Faserverbundwerkstoffen durch das sogenannte Prepreg-Verfahren beschrieben. Dabei werden dünne Lagen von in teilausgehärtetem Harz eingebetteten Fasern laminiert, bis eine Vorform des Formkörpers entstanden ist. Anschließend wird diese Vorform unter mechanischem Druck bei gleichzeitiger Einwirkung eines Vakuums zum Abziehen von Luftblasen aus der Vorform durch Erwärmen ausgehärtet. Dies geschieht typischerweise in einem Autoklaven, in dem die Vorform auf einer Negativform aufliegt und von einer flexiblen Membran abgedeckt wird. Die flexible Membran ist gegenüber der Negativform abgedichtet. Dabei ist zwischen der Vorform der Membran noch eine Schicht aus Gewebematerial angeordnet, die zum Aufnehmen von überschüssigem Harz und zur Ausbildung einer Vakuumzone, des sogenannten Vakuumsacks dient. Der Bereich des Vakuumsacks ist an einer Vakuumquelle angeschlossen.

Davon ausgehend wird in der DE 198 59 798 C1 ein Verfahren zum Herstellen von Formkörpern aus Faserverbundwerkstoffen beschrieben, das auf einem RTM-Verfahren aufbaut. Auf eine steife Negativform wird eine Fasermatte aufgebracht und die Fasermatte wird mit einer flexiblen Membran abgedeckt. Die Membran wird gegenüber der Negativform um die Fasermatte umlaufend abgedichtet und der derart abgedichtete Zwischenraum zwischen der Negativform und der Membran wird evakuiert und auf der der Negativform abgekehrten Rückseite der Membran wird ein statischer Überdruck aufgebracht. Dann wird in den Zwischenraum zwischen der Negativform und der Membran eine Menge flüssigen Harzes mit einem Injektionsdruck injiziert, der größer ist als der Überdruck auf der Rückseite der Membran. Das Harz wird durch die beheizte Negativform unter Einwirkung des Überdrucks auf der Rückseite der Membran erwärmt und zumindest teilweise ausgehärtet. Der Überdruck auf der Rückseite der Membran wird dann abgelassen und der Formkörper mit der in das zumindest teilweise ausgehärtete Harz eingebetteten Fasermatte entformt. Die Negativform kann dabei kontinuierlich beheizt werden und die Membran kann auf ihrer Rückseite gekühlt werden.

Ähnliche Verfahren, bei denen mit einer Membranpresse gearbeitet und ein Harz in den Formraum injiziert wird, werden zum Beispiel in der EP 1 420 940 B1 oder der DE 694 09 618 T2 beschrieben.

Die DE 40 40 746 A1 beschreibt ein Verfahren zum Verdichten eines Verbundmaterialkörpers mit einer Struktur aus unverdichteten Schichten verstärkenden Fasern, die in eine Matrix eingebettet sind, in einer Mem branpresse.

Auch aus der EP 2 070 678 A1 sind eine Form sowie ein Verfahren zur Herstellung von Vorformlingen und faserverstärkten Kunststoffen mit der Form im Rahmen eines RTM-Prozesses bekannt. Das Formwerkzeug weist zwei Platten auf, die einen Hohlraum formen. In das Formwerkzeug sind Leitungen integriert, durch die ein Heizmedium geleitet wird, das dazu dient die Form und entsprechend das eingesetzte Material zu erwärmen. Außerdem ist an einer unteren Platte eine Gummi-Schnur ("rubber cord") angebracht, die als Membran zum Verformen des eingesetzten Materials dient. Diese Gummimembran überdeckt den eingesetzten Werkstoff und drückt diesen an die Form nachdem zur Erzeugung eines Druckes der Innenraum entsprechend evakuiert wurde.

Der Erfindung liegt die Aufgabe zugrunde, ein Verfahren zum Herstellen von (Leicht-)Bauteilen aus Faserverbundwerkstoffen mit hoher Qualität und hoher Stabilität zu schaffen.

Zur Lösung dieser Aufgabe lehrt die Erfindung ein Verfahren zum Herstellen eines Bauteils aus einem Faserverbundwerkstoff durch Umformen eines thermoplastischen Organoblechs in einer Membranpresse gemäß Anspruch 1.

Die Erfindung geht dabei von der Erkenntnis aus, dass sich dreidimensionale Faserverbundbauteile mit hoher Stabilität und hoher Genauigkeit wirtschaftlich aus Organoblechen in einer Membranpresse herstellen lassen, wobei solche Organobleche als (zweidimensionale) plattenförmige konsolidierte Halbzeuge zur Verfügung stehen und sich in der Membranpresse hervorragend unter Anwendung von Druck und Wärme zu dreidimensionalen Strukturen umformen lassen, die zum Beispiel im Flugzeugbau, Fahrzeugbau oder dergleichen einsetzbar sind. Dabei wird - im Gegensatz zu herkömmlichen Prepreg-Verfahren - nicht mit lediglich teilausgehärteten Matten, sondern mit konsolidierten Halbzeugen in Form von Organoblechen gearbeitet, so dass auch kein Injizieren flüssiger Harze oder dergleichen in die Presse erfolgt. Dabei wird ein Organoblech als vorgefertigtes Halbzeug verwendet, das aus mehreren Organoblechlagen besteht, die vor dem Einlegen in die Presse zusammengelegt und gegebenenfalls miteinander verbunden werden. Auf diese Weise lassen sich sehr stabile Bauteile herstellen, die auch eine gewisse Dicke bzw. Wandstärke aufweisen können. Dennoch gelingt im Rahmen der Erfindung in der Membranpresse eine einwandfreie Umformung, da in die Presse eine (hoch-)elastisch dehnbare Membran eingespannt ist, welche unter Zwischenschaltung des Organoblechs elastisch gedehnt und über die Form gespannt wird. Durch das Anlegen von Unterdruck einerseits und Überdruck andererseits erfolgt dann eine einwandfreie Umformung, wobei sich die hochelastische Membran stark dehnt und einwandfrei an die gewünschte Kontur bzw. unter Zwischenschaltung des Organoblechs an die Kontur der Form anlegt. Durch das Anlegen von Unterdruck einerseits und (sehr hohem) Überdruck andererseits gelingt die Umformung konsolidierter Organobleche zu Bauteilen mit komplexer Struktur und kleinen Radien, so dass sich zum Beispiel auch U-förmige Profile mit und ohne Hinterschneidung einwandfrei herstellen lassen. Über hohe Drücke in der Membranpresse wird eine einwandfreie Entlüftung des Werkstücks gewährleistet, so dass Porenbildungen vermieden bzw. Poren entfernt werden können. Insgesamt zeichnen sich die hergestellten Bauteile durch sehr hohe Oberflächenqualität und hohe Stabilität aus.

Auf diese Weise können zum Beispiel hochstabile, leichte Bauteile für den Flugzeugbau, zum Beispiel für Tragflächen bzw. Tragflächenteile hergestellt werden. Beispielsweise können Profile hergestellt werden, die als Bestandteil von Landeklappen zum Einsatz kommen können.

Bevorzugt werden Organobleche eingesetzt, deren Fasern als Carbonfasern, Glasfasern und/oder Aramidfasern ausgebildet sind. Als thermoplastischer Kunststoff kommen besonders bevorzugt hochtemperaturbeständige thermoplastische Kunststoffe, zum Beispiel Polyetheretherketon (PEEK) oder Polyphenylensulfid (PPS) zum Einsatz. Alternativ können jedoch auch Polypropylen (PP), Polyamid (PA) oder Polyurethan (TPU) verwendet werden, je nach Anforderungen und Einsatzgebiet.

Im Zuge der Herstellung ist es zweckmäßig, das Organoblech vor und/oder nach dem Einlegen in die Presse zu erwärmen, um den Umformvorgang zu optimieren. Dabei ist es zweckmäßig, das jeweilige Organoblech auf eine Temperatur oberhalb der Glasübergangstemperatur zu erwärmen. Je nach Organoblech bzw. je nach thermoplastischem Kunststoff kann es zweckmäßig sein, das Organoblech auf eine Temperatur von mehr als 180 °C, z. B. mehr als 200 °C zu erwärmen.

Alternativ oder ergänzend ist es zweckmäßig, die Form oder zumindest deren dem Organoblech zugewandte Oberfläche vor und/oder während der Umformung zu erwärmen. Hier kann es ebenfalls zweckmäßig sein, die Form bzw. deren Oberfläche auf eine Temperatur oberhalb der Glasübergangstemperatur des thermoplastischen Kunststoffs zu erwärmen, zum Beispiel auf eine Temperatur von mehr als 180 °C, z. B. mehr als 200 °C.

Außerdem ist es alternativ oder ergänzend besonders vorteilhaft, wenn auch das Druckmedium, mit dem die Membran beaufschlagt wird, zum Beispiel ein Druckgas, erwärmt wird, um den Wärmeeintrag zu optimieren und die Warmumformung zu verbessern.

Erfindungsgemäß wird nicht nur ein Unterdruck auf der der Form zugewandten Seite der Membran angelegt, sondern die abgewandte Seite der Membran wird außerdem mit einem Überdruck beaufschlagt, wobei besonders bevorzugt ein Überdruck von zumindest 10 bar, zum Beispiel zumindest 20 bar erzeugt werden kann. Erfindungsgemäß wird folglich mit hohen Drücken gearbeitet, um der Tatsache Rechnung zu tragen, dass konsolidierte Organobleche verarbeitet bzw. umgeformt werden.

Dazu wird nicht - wie bei Membranpressen für die Verarbeitung von Prepregs oder für die Injektion von Harz üblich - mit einem Vakuumsack gearbeitet, sondern die hochelastische Membran wird über die Form gespannt. Erfindungsgemäß ist die Membran an dem Pressenoberteil elastisch vorgespannt befestigt und wird dann im Zuge des Schließens der Presse über die Form gespannt.

Grundsätzlich können Membranen aus Kautschuk zum Einsatz kommen. Unter Berücksichtigung der Tatsache, dass bevorzugt mit hochtemperaturbeständigen Kunststoffen gearbeitet wird, empfiehlt die Erfindung den Einsatz einer Membran aus einem hochelastischen und zugleich temperaturbeständigen Material, zum Beispiel aus Silikon bzw. auf Silikonbasis. Dabei kann auf vorhandene Silikon-Membrane zurückgegriffen werden, die eine Bruchdehnung von zumindest 500 %, vorzugsweise zumindest 600 % aufweisen. Die Membran weist bevorzugt eine Dicke von zumindest 1 mm, besonders bevorzugt zumindest 2 mm auf.

Wie bereits beschrieben, wird als Organoblech ein vorgefertigtes Halbzeug aus mehreren Organoblechlagen bzw. einer Vielzahl von Organoblechlagen verwendet, die vor dem Einlegen in die Presse zusammengelegt und gegebenenfalls miteinander verbunden werden. Dabei liegt es im Rahmen der Erfindung, die Organoblechlagen einzeln zusammenzulegen und gemeinsam zu verpressen. Bevorzugt werden die Organoblechlagen jedoch zuvor miteinander (in einer gewünschten Anordnung) verbunden, zum Beispiel durch Schweißen und/oder Kleben, wobei dann eine innige Verbindung anschließend im Zuge der Umformung in der Membranpresse erfolgt. Alternativ liegt es im Rahmen der Erfindung, die einzelnen Organoblechlagen in einer Vorpresse zu einem einheitlichen Organoblech zu verbinden.

Dabei können eine Vielzahl von Lagen verwendet werden, zum Beispiel zumindest fünf Lagen, bevorzugt zumindest zehn Lagen. Für hochstabile Bauteile (zum Beispiel für den Flugzeugbau) können auch mehr als zwanzig Lagen zu einem Organoblech zusammengefügt werden.

Es liegt dabei im Rahmen der Erfindung, einzelne Lagen mit unterschiedlicher Faserausrichtung zu verwenden bzw. die einzelnen Lagen so zu stapeln, dass ihre Fasern nicht parallel verlaufen, sondern unter einem vorgegebenen Winkel. Auf diese Weise können besonders stabile Organobleche und entsprechende Bauteile hergestellt werden. Über die Auswahl und Anordnung der einzelnen Lagen lassen sich Eigenschaften und Geometrie des Bauteils hervorragend beeinflussen. So besteht zum Beispiel die Möglichkeit, einzelne Lagen in unterschiedlichen Größen unter Bildung eines Organoblechs mit über die Fläche variierender Dicke vorzusehen. So entstehen zum Beispiel in Bereichen, in denen mehr Lagen vorhanden sind, als in anderen Bereichen, Werkstücke mit größerer Dicke bzw. Wandstärke. In ähnlicher Weise besteht die Möglichkeit, die einzelnen Lagen so anzuordnen, dass im Zuge der Umformung bei einer Verschiebung der einzelnen Lagen zueinander eine gewünschte Kantengeometrie des Bauteils entsteht. Sind die einzelnen Lagen zum Beispiel im nicht umgeformten Zustand bündig angeordnet, so kann durch die Umformung eine schräge Kantengeometrie erzeugt werden und umgekehrt kann durch eine schräge Anordnung der einzelnen Lagen im Randbereich durch die Umformung eine gerade Kantengeometrie erzielt werden. So kann es zum Beispiel gewünscht sein, Bauteile mit abgeschrägten Kanten zu erzeugen, um verbesserte Fügeflächen für die Weiterverarbeitung zur Verfügung zu stellen.

Das erfindungsgemäße Verfahren lässt sich durchführen mit einer Presse zum Herstellen eines Bauteils aus einem Faserverbundwerkstoff nach einem Verfahren der beschriebenen Art. Eine solche Presse ist als Membranpresse aufgebaut, die ein Pressenunterteil aufweist, an/auf dem eine Form angeordnet ist und die ein Pressenoberteil aufweist, welches einen gegen das Pressenunterteil abdichtbaren Druckkoffer aufweist. Außerdem ist eine Membran vorgesehen, welche über die Form spannbar ist.

Die Presse weist zumindest einen Presszylinder auf, der auf das Pressenoberteil und/oder das Pressenunterteil wirkt. Außerdem weist die Presse eine Vakuumpumpe auf, mit der auf der einen Seite der Membran, zum Beispiel der Unterseite, ein Unterdruck erzeugbar ist und eine Überdruckpumpe, mit der auf der anderen Seite der Membran ein Überdruck erzeugbar ist.

Die Presse kann so ausgebildet sein, dass die Form bzw. das Pressenunterteil beheizbar und folglich wie eine Heizvorrichtung ausgerüstet sind. Außerdem ist die Presse so ausgebildet, dass das Druckmedium, mit welchem die Membran beaufschlagt wird, beheizbar ist, indem zum Beispiel eine Heizvorrichtung im Bereich der Zuführung für das Druckmedium angeordnet ist.

Die Membran ist an dem Pressenoberteil, zum Beispiel an dem Druckkoffer, elastisch vorgespannt befestigt.

Im Folgenden wird die Erfindung anhand einer lediglich ein Ausführungsbeispiel darstellenden Zeichnung näher erläutert. Es zeigen
- Fig.1: eine Membranpresse in einer vereinfachten Darstellung,
- Fig. 2: den Gegenstand nach Fig. 1 in einer anderen Funktionsstellung,
- Fig. 3: eine Membranpresse zur Durchführung des erfindungsgemäßen Verfahrens
- Fig. 4: die Presse nach Fig. 3 in einer anderen Funktionsstellung,
- Fig. 5: einen Umformvorgang eines mehrlagigen Organoblechs in einer ersten Ausführungsform und
- Fig. 6: einen Umformvorgang eines mehrlagigen Organoblechs in einer zweiten Ausführungsform.

In den Figuren ist eine Membranpresse 1 für die Herstellung eines Bauteils aus einem Faserverbundwerkstoff dargestellt. In einer solchen Membranpresse wird ein Bauteil aus einem Faserverbundwerkstoff durch Umformen eines thermoplastischen Organoblechs 2 hergestellt. Die Membranpresse 1 weist im Ausführungsbeispiel ein Pressenunterteil 3 auf, das als Pressentisch ausgebildet ist, auf dem eine Form 4 als Negativform des herzustellenden Bauteils angeordnet ist. Außerdem weist die Presse 1 ein Pressenoberteil 5 auf, welches einen gegen das Pressenunterteil 3 abdichtbaren haubenartigen Druckkoffer 6 aufweist. Dazu ist die untere, auf dem Pressentisch absetzbare umlaufende Stirnfläche 7 des Druckkoffers 6 mit einer umlaufenden Dichtung 8 versehen. Auf das Pressenoberteil 5 wirkt ein Presszylinder 9, wobei im Ausführungsbeispiel der Kolben 10 des Presszylinders 9 an den Druckkoffer 6 angeschlossen ist, so dass der Druckkoffer 6 mit dem Zylinder 9 bzw. dessen Kolben 10 gegen das Pressenunterteil 3 gedrückt wird. Außerdem ist die Membranpresse 1 mit einer elastisch dehnbaren Membran 11 ausgerüstet, welche über die Form 4 spannbar ist. Ferner ist eine Vakuumpumpe 12 vorgesehen, welche im Ausführungsbeispiel an das Pressenunterteil 3 angeschlossen ist. Außerdem ist eine Überdruckpumpe 13 vorgesehen, die im Ausführungsbeispiel an das Pressenoberteil 5 bzw. an den Druckkoffer 6 angeschlossen ist.

Zum Umformen eines Organoblechs 2 wird dieses Organoblech auf die Form 4 gelegt und die Membran 11 wird unter Zwischenschaltung des Oranoblechs 2 über die Form 4 gedehnt und vorgespannt.

Das Organoblech wird unter Bildung des Bauteils umgeformt, indem die Membran 11 auf der der Form 4 zugewandten Seite über die Vakuumpumpe 12 mit einem Unterdruck beaufschlagt wird und auf der der Form 4 abgewandten Seite mit der Überdruckpumpe 13 mit einem Überdruck beaufschlagt wird, so dass sich das Organoblech 2 unter Bildung des Bauteils an die Form 4 anformt.

Dabei ist vorgesehen, dass das Organoblech 2 vor dem Einlegen in die Presse 1 erwärmt wird. Außerdem ist bevorzugt vorgesehen, dass die Form 4 oder zumindest deren dem Organoblech 2 zugewandte Oberfläche vor und/oder während der Umformung erwärmt wird. Schließlich ist es zweckmäßig, wenn auf das Druckmedium, mit welchem die Membran mit Überdruck beaufschlagt wird, erwärmt wird. Dazu ist in den Figuren eine Heizvorrichtung 14 angedeutet. Die Heizvorrichtungen zum Erwärmen des Organoblechs und zum Erwärmen der Form sind nicht dargestellt.

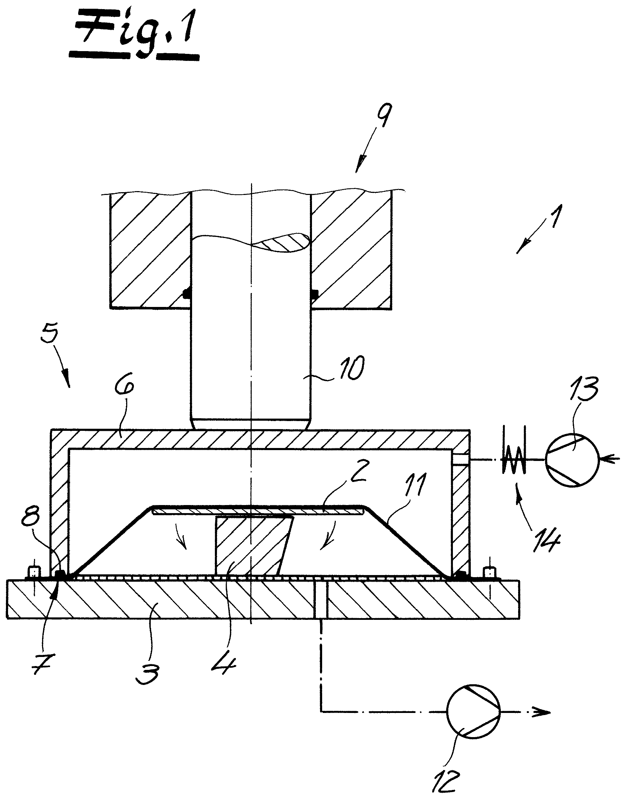

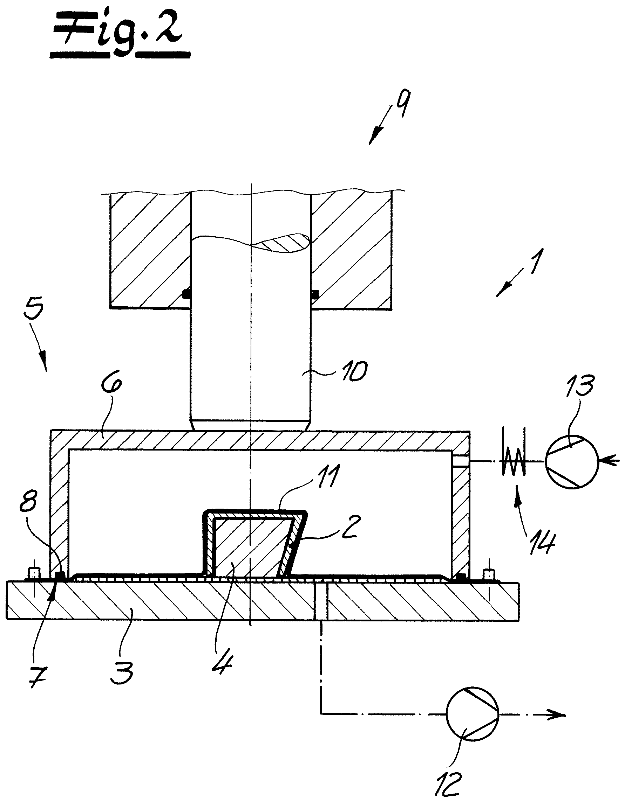

Fig. 1 zeigt eine Ausführungsform einer solchen Membranpresse, bei welcher die Membran 11 an dem Pressenunterteil 3 befestigt und über die Form 4 gespannt wird. Fig. 1 zeigt die Presse, nachdem das Organoblech 2 auf die Form 4 aufgelegt und die Membran 11 über die Form 4 unter Zwischenschaltung des Organoblechs 2 gespannt wurde. Außerdem wurde das Pressenoberteil 5 nach dem Einlegen des Organoblechs 2 und nach dem Spannen der Membran 11 auf das Pressenunterteil 3 abgesenkt und abgedichtet. Der Unterdruck kann mit der Vakuumpumpe 12 vor und/oder nach dem Absenken des Pressenoberteils erzeugt werden. Nachdem das Pressenoberteil 5 gegen das Pressenunterteil 3 abgesenkt und abgedichtet wurde, wird der Innenraum des Druckkoffers 6 mit dem Überdruck beaufschlagt. Dabei kann vorgesehen sein, dass der mit dem Zylinder 9 erzeugte Pressdruck, mit welchem die Membranpresse bei sich aufbauendem Innendruck zugehalten wird, sukzessive mit dem Aufbau des Innendrucks erhöht und folglich angepasst wird. Fig. 2 zeigt die Presse nach erfolgtem Aufbau des Überdrucks und des Unterdrucks mit umgeformtem Organoblech 2.

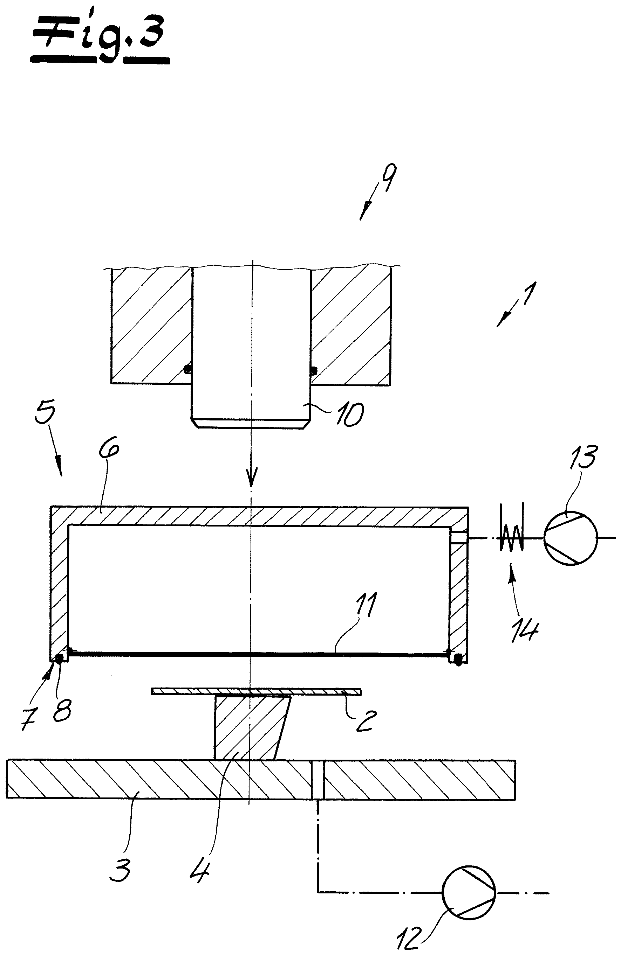

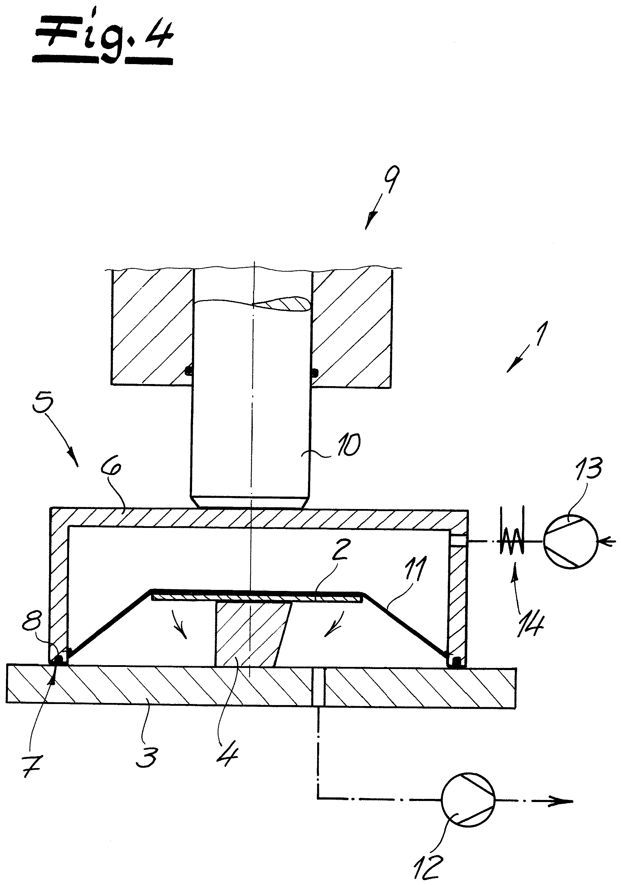

Die Fig. 3 und 4 zeigen eine Ausführungsform einer Membranpresse zur Durchführung des erfindungsgemäßen Verfahrens, bei der die Membran nicht am Pressenunterteil 3, sondern am Pressenoberteil 5, nämlich an dessen Druckkoffer 6 befestigt und elastisch vorgespannt ist (Fig. 3). Nach dem Auflegen des Organoblechs 2 auf die Form 4 wird der Druckkoffer 6 abgesenkt und dabei die Membran unter Zwischenschaltung des Organoblechs 2 über die Form gespannt (Fig. 4). Nachdem die Presse geschlossen wurde, werden einerseits der Unterdruck und andererseits der Überdruck aufgebaut und damit das Organoblech 2 umgeformt und das Bauteil erzeugt.

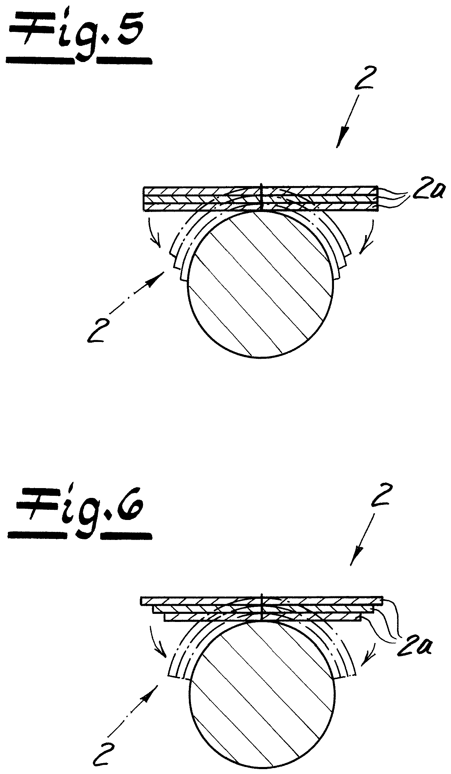

Das Organoblech 2 besteht aus mehreren einzelnen Organoblechlagen 2a, die unter Bildung des Organoblechs 2 zusammengelegt und in der Presse umgeformt werden. Dabei können die Lagen 2a in ihrer Geometrie so aufeinander abgestimmt werden, dass sich die einzelnen Lagen 2a im Zuge der Umformung unter Veränderung der Kantengeometrie des Bauteils gegeneinander verschieben. Diese Option ist in den Fig. 5 und 6 dargestellt. Gemäß Fig. 5 werden die einzelnen Lagen 2a zu einem Organoblech 2 mit geraden Kanten zusammengelegt. Im Zuge der Umformung kommt es zu einer Verschiebung der einzelnen Lagen zueinander, so dass ein Bauteil mit abgeschrägten Kanten entsteht.

Im Gegensatz dazu zeigt Fig. 6 eine Ausführungsform, bei welcher die einzelnen Lagen 2a des Organoblechs 2 nicht bündig übereinander liegen, sondern schräge Kanten bilden, so dass dann im Zuge der Umformung ein Bauteil mit geraden Kanten ohne Schrägen entsteht.

## Patentansprüche

1. Verfahren zum Herstellen eines Bauteils aus einem Faserverbundwerkstoff durch Umformen eines thermoplastischen Organoblechs (2) in einer Membranpresse (1),
wobei die Membranpresse ein Pressenunterteil aufweist, an/auf dem eine Form angeordnet ist und wobei die Membranpresse ein Pressenoberteil aufweist, welches einen gegen das Pressenunterteil abdichtbaren Druckkoffer aufweist,
wobei zumindest ein Organoblech (2) als Werkstück auf oder an die Form gelegt wird,
wobei das Organoblech (2) als vorgefertiges Halbzeug aus mehreren Organoblechlagen (2a) besteht, die vor dem Einlegen in die Presse (1) zusammengelegt werden,
wobei eine elastisch dehnbare Membran (11) unter Zwischenschaltung des Organoblechs (2) über die Form (4) gedehnt vorgespannt wird,
wobei die Membran an dem Pressenoberteil elastisch vorgespannt befestigt ist
und wobei das Organoblech (2) unter Bildung des Bauteils umgeformt wird, indem die Membran (11) auf der der Form zugewandten Seite mit einem Unterdruck und auf der der Form abgewandten Seite mit einem Überdruck beaufschlagt wird, so dass sich das Organoblech (2) an die Form anformt.

2. Verfahren nach Anspruch 1, wobei das Organoblech (2) vor und/oder nach dem Einlegen in die Presse (1) erwärmt wird, zum Beispiel auf eine Temperatur von mehr als 180 °C.

3. Verfahren nach Anspruch 1 oder 2, wobei die Form (4) oder zumindest deren dem Organoblech (2) zugewandte Oberfläche vor und/oder während der Umformung erwärmt wird, zum Beispiel auf eine Temperatur von mehr als 180 °C.

4. Verfahren nach einem der Ansprüche 1 bis 3, wobei das die Membran (11) mit Überdruck beaufschlagende Druckmedium erwärmt wird.

5. Verfahren nach einem der Ansprüche 1 bis 4, wobei der Überdruck zumindest 10 bar, vorzugsweise zumindest 20 bar beträgt.

6. Verfahren nach einem der Ansprüche 1 bis 5, wobei die Organoblechlagen (2a) vor dem Einlegen in die Presse (1) miteinander verbunden werden.

7. Verfahren nach Anspruch 6, wobei einzelne Lagen (2a) unterschiedliche Faserausrichtungen aufweisen.

8. Verfahren nach Anspruch 6 oder 7, wobei einzelne Lagen (2a) eine unterschiedliche Größe unter Bildung eines Organoblechs mit über die Fläche variierender Dicke aufweisen.

9. Verfahren nach einem der Ansprüche 1 bis 8, wobei die Membran (11) aus Silikon gefertigt ist.

10. Verfahren nach einem der Ansprüche 1 bis 9, wobei die Membran (11) eine Dicke von zumindest 1 mm, vorzugsweise zumindest 2 mm und/oder eine Bruchdehnung von zumindest 500 %, vorzugsweise zumindest 600 % aufweist.

11. Verfahren nach einem der Ansprüche 6 bis 10, wobei sich die einzelnen Lagen (2a) im Zuge der Umformung unter Veränderung der Kantengeometrie des Bauteils gegeneinander verschieben.

## Claims

1. Method of manufacturing a component made of a fibre-reinforced composite material by forming a thermoplastic organic component (2) in a membrane press (1),
wherein the membrane press comprises a press lower part, onto/on which a mould is arranged, and wherein the membrane press comprises a press upper part which has a pressure case that can be sealed against the press lower part,
wherein as the workpiece, at least one organic sheet (2) is placed onto or on the mould,
wherein, as prefabricated semi-finished product, the organic sheet (2) consists of several organic sheet layers (2a) which are placed together before insertion into the press (1),
wherein an elastically expandable membrane (11) is stretched over the mould (4) with the interspersion of the organic sheet (2),
wherein the membrane is fastened to the press upper part in an elastically pretensioned manner
and wherein the organic sheet (2) is formed, forming the component, in that a negative pressure is applied to the side of the membrane (11) facing the mould and an overpressure is applied to the side facing away from the mould, so that the organic sheet (2) adapts to the mould.

2. Method according to claim 1, wherein before and/or after being placed in the press (1), the organic sheet (2) is heated, for example to a temperature of more than 180 °C.

3. Method according to claim 1 of 2, wherein the mould (4) or at least its side facing the organic sheet (2) is heated before and/or during the forming, for example to a temperature of more than 180 °C.

4. Method according to any one of claims 1 to 3, wherein pressure medium acting on the membrane (11) with overpressure is heated.

5. Method according to any one of claims 1 to 4, wherein the overpressure is at least 10 bar, preferably at least 20 bar.

6. Method according to any one of claims 1 to 5, wherein the organic sheet layers (2a) are connected to each other before being placed in the press (1).

7. Method according to claim 6, wherein the individual layers (2a) have different fibre orientations.

8. Method according to claim 6 or 7, wherein individual layers (2a) are of different sizes, forming an organic sheet with a thickness varying over its area.

9. Method according to any one of claims 1 to 8, wherein the membrane (11) is made of silicone.

10. Method according to any one of claims 1 to 9, wherein the membrane (11) has a thickness of at least 1 mm, preferably at least 2 mm, and/or an elongation at break of at least 500 %, preferably at least 600 %.

11. Method according to any one of claims 6 to 10, wherein during the course of forming, the individual layers (2a) are displaced in relation to each other, changing the edge geometry of the component.

## Revendications

1. Procédé de fabrication d'un composant en matière composite à base de fibres par déformation d'une tôle organique thermoplastique (2) dans une presse à membrane (1),
sachant que la presse à membrane comporte une partie inférieure de presse, sur laquelle est disposé un moule et sachant que la presse à membrane comporte une partie supérieure de presse, laquelle comporte un caisson sous pression pouvant être étanchéifié contre la partie inférieure de presse,
sachant au moins qu'une tôle organique (2) est posée en tant que pièce sur ou contre le moule,
sachant que la tôle organique (2) est composée de plusieurs couches de tôle organique (2a) sous la forme d'un produit semi-fini préfabriqué, qui sont assemblées avant l'introduction dans la presse (1),
sachant qu'une membrane (11) pouvant se dilater élastiquement est précontrainte distendue par le moule (4) en intercalant la tôle organique (2),
sachant que la membrane est fixée précontrainte élastiquement sur la partie supérieure de presse,
et sachant que la tôle organique (2) est déformée en formant le composant, la membrane (11) étant sollicitée sur le côté tourné vers le moule par une dépression et sur le côté éloigné du moule par une surpression de telle manière que la tôle organique (2) se conforme au moule.

2. Procédé selon la revendication 1, sachant que la tôle organique (2) est chauffée avant et/ou après l'introduction dans la presse (1), par exemple à une température de plus de 180 °C.

3. Procédé selon la revendication 1 ou 2, sachant que le moule (4) ou au moins sa surface tournée vers la tôle organique (2) est chauffé(e) avant et/ou pendant la déformation, par exemple à une température de plus de 180 °C.

4. Procédé selon l'une quelconque des revendications 1 à 3, sachant que la membrane (11) est échauffée avec un milieu sous pression appliquant une surpression.

5. Procédé selon l'une quelconque des revendications 1 à 4, sachant que la surpression est d'au moins 10 bars, de préférence d'au moins 20 bars.

6. Procédé selon l'une quelconque des revendications 1 à 5, sachant que les couches de tôle organique (2a) sont reliées entre elles avant l'introduction dans la presse (1).

7. Procédé selon la revendication 6, sachant que les couches (2a) individuelles comportent des orientations de fibres différentes.

8. Procédé selon la revendication 6 ou 7, sachant que les couches (2a) individuelles comportent une taille différente en formant une tôle organique avec une épaisseur variant sur la surface.

9. Procédé selon l'une quelconque des revendications 1 à 8, sachant que la membrane (11) est fabriquée en silicone.

10. Procédé selon l'une quelconque des revendications 1 à 9, sachant que la membrane (11) comporte une épaisseur d'au moins 1 mm, de préférence d'au moins 2 mm et/ou un allongement à la rupture d'au moins 500 %, de préférence d'au moins 600 %.

11. Procédé selon l'une quelconque des revendications 6 à 10, sachant que les couches (2a) individuelles se déplacent les unes contre les autres au cours de la déformation par modification de la géométrie des bords du composant.
